# EUROPEAN PATENT APPLICATION

(11) **EP 1 258 185 A1**
(43) Date of publication of application: **20.11.2002**
(21) Application number: 02010813.0
(22) Date of filing: 15.05.2002
(51) Int. Cl.: A01D 34/68

(54) **Self-propelled walk-behind implement and trasaxle therefor**

(30) Priority: 15.05.2001 US 290949 P
(71) Applicant: TECUMSEH PRODUCTS COMPANY, Tecumseh Michigan 49286 (US)
(72) Inventor: Williams, Douglas G., Bedford, IN 47421 (US); Johnson, Kevin L., Douglas, Georgia 31533 (US)
(74) Representative: Dr. Weitzel & Partner

(57) **Abstract**

A self-propelled, walk-behind implement (20a, 20b) including a body (22), an engine (24) attached to the body and having an output shaft (23), ground-engaging drive wheels (30, 32), and a transaxle (34, 34a). The transaxle includes a housing (54), a input shaft (36) extending into the housing and selectively operatively engaged with the output shaft, an axle (64) having an axis of rotation (48) and extending through the housing, the drive wheels coupled to the axle, a rotatable driving member (88, 88a) disposed within the housing and engaged with the input shaft, and a driven member (90, 90a) disposed within the housing and driven by the driving member. The driven member has a first axial position along the axle in which the driven member is not engaging the axle and the axle is freely rotatable, and a second axial position in which the driven member is in operative engagement with the driving member and the axle and the input and output shafts are operatively engaged.

## Description

The present invention relates to transaxles intended primarily for use in the lawn and garden industry, particularly transaxles used in self-propelled, walk-behind implements such as lawn mowers.

Self-propelled walk-behind implements such as lawn mowers are well known in the art. Typically, these mowers are provided with an internal combustion engine having an output shaft which drives both the rotating cutting blade and the ground-engaging drive wheels which propel the mower forward. Usually, the engine's output shaft is vertically oriented, and the cutting blade is fixed directly thereto; a transmission driving pulley may be fixed to the engine's output shaft at a location above the blade, about which a transmission drive belt is reeved.

The transaxle has an input shaft provided with an input pulley about which the transmission drive belt is also reeved, and a housing within which a gear drive mechanism is provided for transferring the rotary motion of the transaxle's input shaft to an axle which extends through the housing, the axle normally being radially supported near its ends by the mower deck. The transaxle may be provided at the front or rear of the mower body or deck to drive a pair of drive wheels located near the opposite ends of the axle. The drive wheels may be rotatably fixed directly to the axle. Alternatively, the drive wheels may themselves be attached to the mower body and driven by the axle through speed reduction gearing, a small gear being rotatably fixed to each axle end, an intermeshing larger gear being rotatably fixed to each drive wheel. U.S. Pat. No. 5,718,105 (Irikura et al.) discloses this latter arrangement for driving the rear wheels of the mower.

It is known to fix the transaxle housing relative to the mower body such that it does not pivotally rotate about the axle's axis of rotation. Such arrangements may provide a transaxle having its input shaft at all times operatively coupled to its axle through a gear arrangement, and provide a tensioner including a separate, third, moveable pulley located between the engine's transmission driving pulley and the transaxle's input pulley, power being selectively transferred from the engine to the transaxle by moving the tensioner against the transmission drive belt to bring the belt into a substantially tensioned state in which the transaxle input shaft is placed in driving engagement with the engine output shaft. Thus, power is transferred from the engine to the drive wheels by selectively tensioning the transmission drive belt. Typically, the tensioner is biased by a spring into a disengaged or nontensioning position in which the belt is in a substantially slackened state, and is moved into its engaged or tensioning position against the force of the spring by means of a Bowden cable actuated by the operator. A problem associated with such transaxles is that manual maneuvering of the mower can be difficult because the axle and drive wheels cannot rotate freely relative to the gearing within the transaxle housing. Manually pushing or pulling of the mower is sometimes desired during some trimming operations, when greater mower control is necessary, or for moving the mower about with the engine off.

Substantial effort may be required to manually push or pull the mower even if the transmission drive belt is completely out of frictional engagement with the transaxle input pulley. High manual pushing and pulling efforts result with such transaxles because the transaxle's input shaft and axle are always operatively engaged, and the gears which couple the input shaft and axle within the housing are being backdriven during manual maneuvering in the forward and reverse directions. Moreover, providing the separate, third tensioner pulley adds cost and complexity to the mower, and does not address the problem of high manual maneuvering efforts.

Alternatively, with the transaxle housing again fixed relative to the mower deck, it is known to fix the transmission drive belt tension, and selectively operatively couple the transaxle input shaft and axle through the engagement of a friction clutch mechanism provided within the transaxle housing. Thus, power is transferred from the engine to the drive wheels by selectively actuating the friction clutch mechanism. Typically, the friction clutch mechanism is biased by a spring out of its engaged position, and is moved into its engaged position against the force of the spring by means of a Bowden cable actuated by the operator.

The Model 301 transaxle manufactured by the Peerless Division of Tecumseh Products Company provides a pair of cone clutches rotatably fixed to the axle, and which are selectively brought into frictional engagement with a worm gear provided axially between the cone clutches. The worm gear is driven by a worm provided on the transaxle input shaft. With the cone clutches disengaged, the transaxle input shaft and axle are out of operative engagement, and the mower may be manually pushed or pulled with little effort. Such friction clutch mechanisms, however, comprise additional parts which consequently add to the cost of the transaxle and the mower. Moreover, a separate, third idler pulley may be necessary to set the fixed transmission drive belt tension, adding additional cost and complexity.

It is also known to provide a transaxle arranged such that its housing is selectively pivotally rotated relative to the axle's axis of rotation. Normally, in such a transaxle, its input shaft is at all times operatively coupled with its axle through a gear arrangement, as described above, and the transmission drive belt is tensioned by pivoting the transaxle housing to increase the distance between the transaxle's input pulley and the engine's transmission driving pulley. Conventionally, the transaxle housing is biased by a spring into a rotational position about the axle's axis of rotation in which the transmission drive belt is substantially loose about the engine and transaxle pulleys, and is tensioned by selectively rotating the transaxle housing to bring the belt into a tensioned state, wherein power is transferred from the engine to the axle. Typically, the housing is rotated against the force of the spring by means of a Bowden cable actuated by the operator. Such transaxle arrangements are comparatively cheaper than both of the above-described previous transaxle arrangements; no separate, third tensioner or idler pulley is necessary, nor is a clutch mechanism. These transaxles, however present the above-mentioned problem of backdriving the gears within the transaxle, and consequently require undesireably high efforts to manually push or pull the mower.

What is needed is an implement such as a walk-behind mower which has a comparatively lower cost vis-a-vis implements having the above-described transaxle arrangements, and which does not backdrive the transaxle, thereby requiring lower efforts to manually push and pull the mower.

The present invention addresses the above-discussed shortcomings of the transaxles of previous self-propelled implements providing a relatively lower cost transaxle which is not backdriven during manual maneuvering of the implement. Embodiments of the inventive implement may be provided with or without a third pulley for varying the tension of transmission drive belt for selectively transmitting power from the engine to the inventive transaxle. One embodiment of an implement, such as a mower, according to the present invention has its transaxle housing fixed relative to the mower deck, and power is transferred from the engine to the transaxle by selectively tensioning the transmission drive belt by means of a third, moveable tensioner pulley. Another embodiment of an implement according to the present invention allows the transmission drive belt to be tensioned by pivotal rotation of the transaxle housing about the axle's axis of rotation, in the above-described manner; a third tensioner pulley is not required.

Further, according to certain embodiments of the present invention, the input shaft and axle of the inventive transaxle may be operatively disengaged to prevent backdriving of the transaxle during manual maneuvering of the mower, without a comparatively more expensive and complex clutch mechanism. Further still, certain embodiments of the inventive transaxle may provide the additional advantage, vis-a-vis selectively clutched transaxles of the type described above, of resisting backward motion under the force of gravity when stopped on a hill, after tension on the transmission drive belt has been released.

The present invention provides a self-propelled, walk-behind implement including a body, an engine attached to the body and having an output shaft, ground-engaging drive wheels, and a transaxle. The transaxle includes a housing, a input shaft extending into the housing and selectively operatively engaged with the engine output shaft, an axle having an axis of rotation and extending through the housing, the drive wheels coupled to the axle, a rotatable driving member disposed within the housing and engaged with the input shaft, the driving member being rotatably driven by the input shaft, and a driven member disposed within the housing and being rotatably driven by the rotating driving member. The driven member has a first axial position along the axle axis of rotation in which the driven member is out of operative engagement with the axle, the axle being freely rotatable relative to the housing when the driven member is in its first axial position, and a second axial position along the axle axis of rotation when the input shaft is operatively engaged with the engine output shaft and in which the driven member is in operative engagement with the driving member and the axle.

The present invention also provides a transaxle for a walk-behind implement which includes a housing, a rotatable input shaft extending into the housing, an axle having an axis of rotation and extending through the housing, a rotatable driving member disposed within the housing and engaged with the input shaft, the driving member being rotatably driven by the input shaft, and a driven member disposed within the housing and being rotatably driven by the rotating driving member. The driven member has a first axial position along the axle axis of rotation in which the driven member is out of operative engagement with the axle, the axle being freely rotatable relative to the housing when the driven member is in its first axial position, and a second axial position along the axle axis of rotation when the input shaft is rotated and in which the driven member is in operative engagement with the driving member and the axle.

The above-mentioned and other features and objects of this invention, and the manner of attaining them, will become more apparent and the invention itself will be better understood by reference to the following description of embodiments of the invention taken in conjunction with the accompanying drawings, wherein:

Figure 1A is an upper frontal view of a first embodiment of a walk-behind implement according to the present invention;

Figure 1B is an upper frontal view of a second embodiment of a walk-behind implement according to the present invention;

Figure 2 is an enlarged fragmentary upper frontal view of the implement of Figure 1A with its inventive transaxle shown in a disengaged state;

Figure 3 is an enlarged fragmentary upper frontal view of the implement of Figure 1A with its inventive transaxle shown in an engaged state;

Figure 4 is a lower frontal view of the implement of Figure 2;

Figure 5 is an exploded view of a first embodiment of the inventive transaxle;

Figure 6 is an enlarged upper rear view of the inventive transaxle of Figure 5 with its upper housing portion removed;

Figure 7 is a plan view of the transaxle shown in Figure 6 in a disengaged state;

Figure 8 is a plan view of the transaxle shown in Figure 6 in an engaged state;

Figure 9 is a side view of the axle of the transaxle of Figure 5;

Figure 10A is an axial view of the spacer of the transaxle shown in Figure 5;

Figure 10B is a sectional side view of the spacer of Figure 10A along line 10B-10B;

Figure 11A is an axial view of the collar of the transaxle shown in Figure 5;

Figure 11B is a sectional side view of the collar of Figure 11A along line 11B-11B;

Figure 12A is side view of the worm gear of the transaxle shown in Figure 5;

Figure 12B is an axial view of the worm gear of Figure 12A;

Figure 12C is a sectional side view of the worm gear of Figure 12B along line 12C-12C;

Figure 13 is an enlarged fragmentary portion of a second embodiment of the inventive transaxle;

Figure 14 is a perspective view of the driven member of the transaxle of Figure 13;

Figure 15A is a perspective view of the dog clutch member of the transaxle of Figure 13;

Figure 15B is a sectional view of the dog clutch member of Figure 15A, along line 15B-15B of Figure 15A;

Figure 16 is a plan view of the second embodiment of the inventive transaxle shown in Figure 13 in a disengaged state; and

Figure 17 is a plan view of the second embodiment of the inventive transaxle shown in Figure 13 in an engaged state.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate particular embodiments of the invention, but such exemplifications are not to be construed as limiting the scope of the invention in any manner.

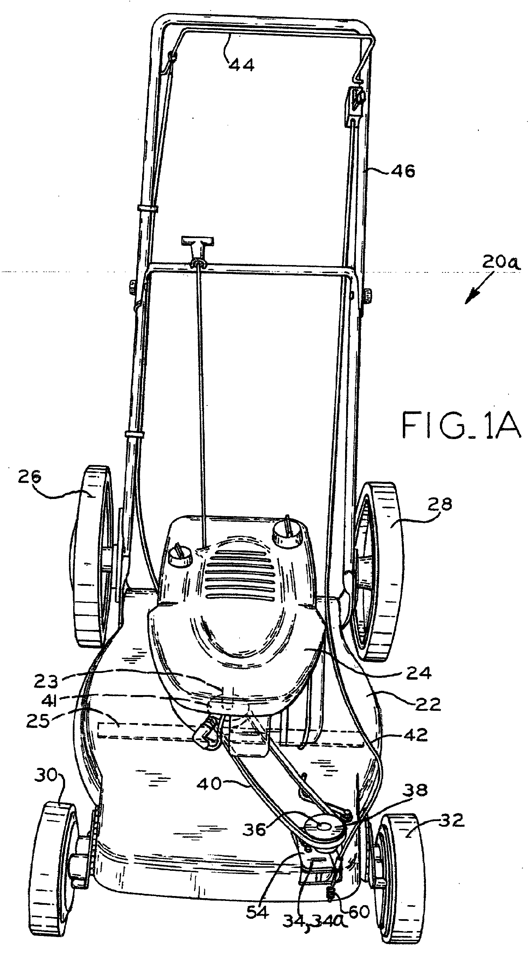

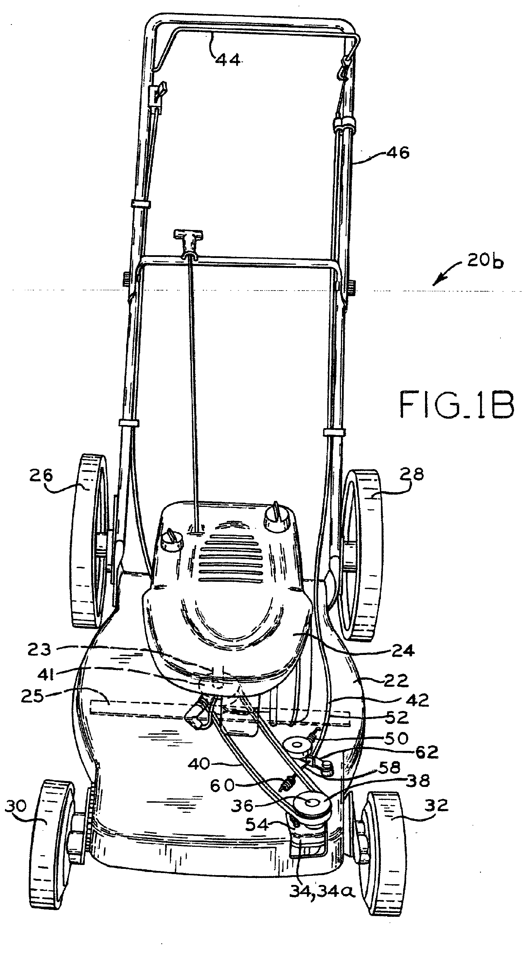

Referring to Figures 1A and 1B, there are shown two embodiments of an implement according to the present invention. Lawnmower 20a, shown in Figure 1A, is a first embodiment implement which includes body 22, engine 24 attached to the body and having a vertical output shaft 23, a rotating blade 25 attached to the end of the engine output shaft, and a plurality of ground engaging wheels 26, 28, 30 and 32. Although these embodiments show front wheels 30 and 32 as being the drive wheels, those of ordinary skill in the art will recognize that rear wheels 26 and 28 may alternatively be the drive wheels.

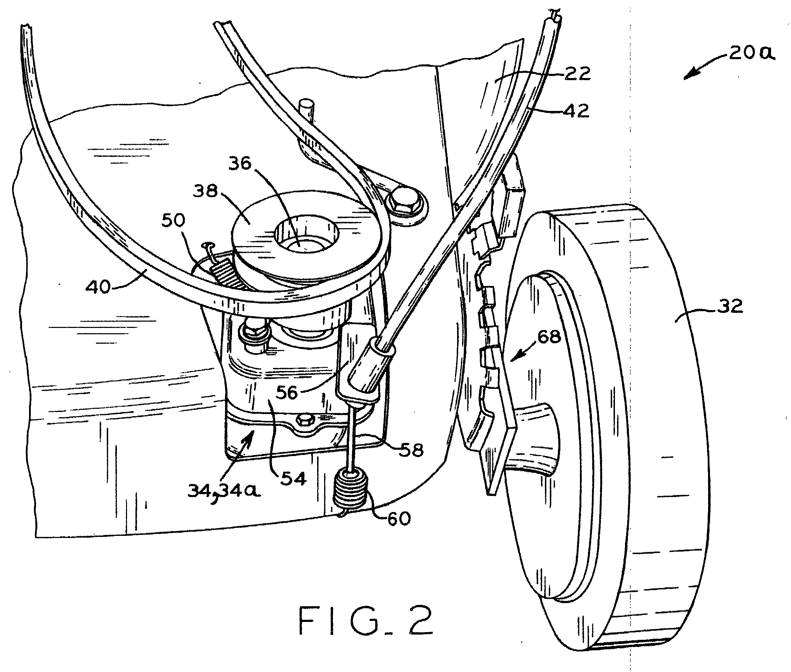

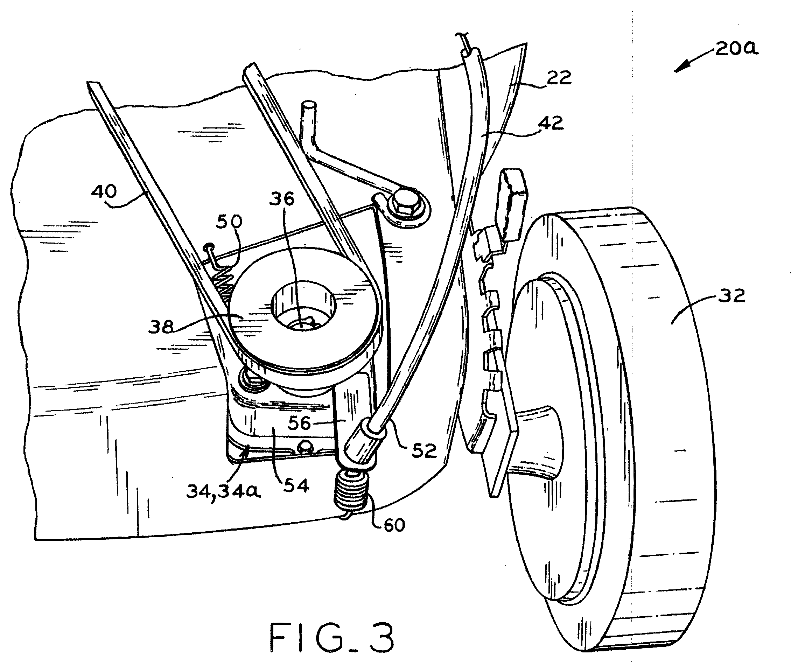

Drive wheels 30 and 32 are driven by inventive transaxle 34, which is provided with input shaft 36 on which is fixed input pulley 38, about which is reeved belt 40. Belt 40 is also reeved about pulley 41 attached to the engine output shaft. Belt 40, as shown in Figure 2, has a substantially slackened state and, as shown in Figure 3, a substantially tensioned state, the tensioning of the belt being controlled through Bowden cable 42 connected to bail 44, which is attached to handle 46 of the implement.

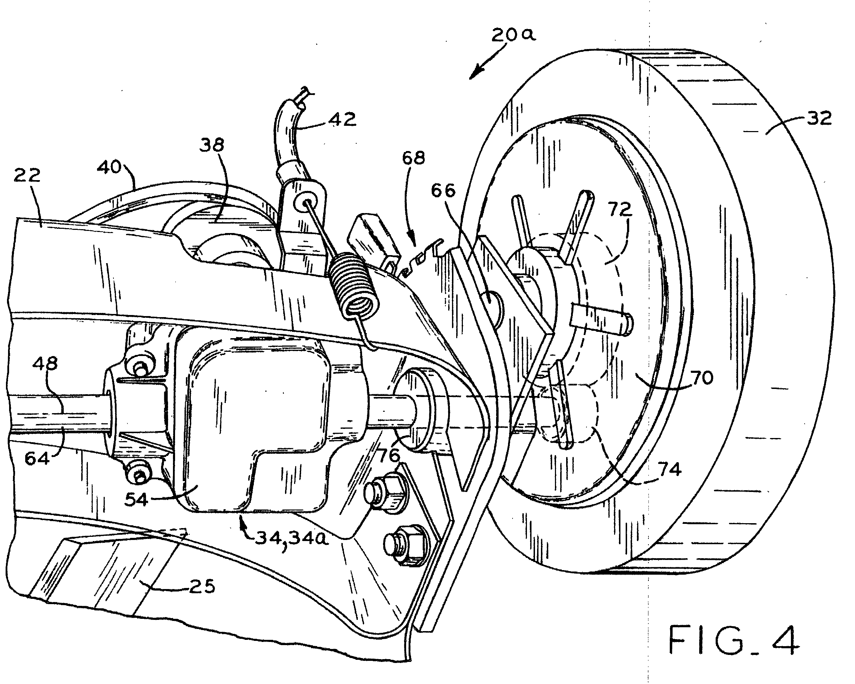

Referring to Figures 1A and 4, belt 40 of implement 20a is tensioned by rotating transaxle 34 about axis of rotation 48 from a first, disengaged angular position to a second, engaged angular position. Figures 2 and 3 respectively show transaxle 34 in these disengaged and engaged positions, in which belt 40 is respectively in its substantially slackened and substantially tensioned states. Transaxle 34 is biased by spring 50 into its disengaged angular position. Sheath portion 52 of Bowden cable 42 is attached to transaxle housing 54 by means of bracket 56. Wire portion 58 of Bowden cable 42 is attached through spring 60 to body 22. Manipulation of bail 44 pulls wire portion 58 through sheath portion 52 and rocks transmission 34 forward about axis of rotation 48.

Figure 1B shows a second embodiment implement according to the present invention. Mower 20b is substantially identical to mower 20a except as otherwise described hereinbelow. In implement 20b, transaxle housing 54 is rotatably fixed to body 22 and does not pivot between engaged and disengaged angular positions. Implement 20b is provided with tensioner 62 which is pivotally attached to body 22, and biased into its disengaged position (shown) by spring 50, which is attached to body 22. Manipulation of bail 44 causes Bowden cable wire portion 58 to be pulled through Bowden cable sheath portion 52, and urges tensioner 62 into an engaged position (not shown) in which belt 40 is brought into its substantially tensioned state. Wire portion 58 is attached to body 22 through spring 60. Except for the means for tensioning belt 40, implements 20a and 20b are structurally and functionally identical, and a substantially common transaxle assembly 34 may be used in either implement. The remainder of this detailed description of transaxle 34 will focus on implement 20a.

Referring to Figure 4, which shows implement 20a with transaxle 34 in its disengaged angular position, it can be seen that transaxle 34 is provided with elongate cylindrical axle 64, the axis of rotation of which coincides with axis of rotation 48. Drive wheels 30 and 32 are each provided with wheel axles 66 about which these wheels rotate, and which are attached to body 22 through height adjusting mechanism 68. The inboard sides of drive wheels 30 and 32 are each provided with cover 70 within which are provided speed reducing gears. Large diameter gear 72 is fixed to each drive wheel 30 and 32, and has an axis of rotation coinciding with the longitudinal axis of its corresponding wheel axle 66. Intermeshed with large diameter gear 72 is small diameter gear 74 which is rotatably fixed to each end of axle 64. Axle 64 is rotatably supported relative to body 22 through bearings 76.

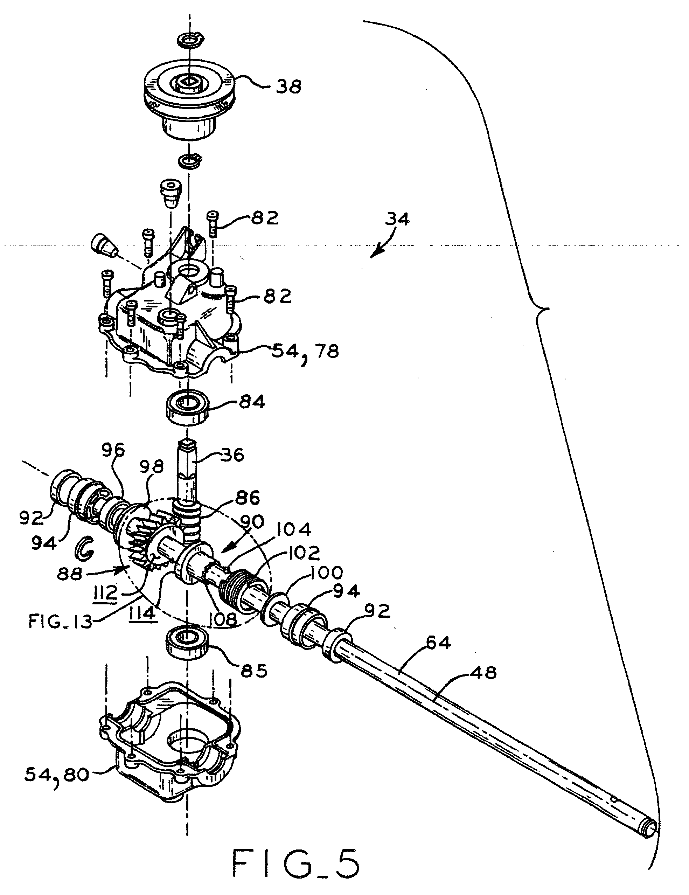

Referring to Figure 5, transaxle housing 54 is comprised of upper and lower portions 78, 80 secured together by bolts 82. Input shaft 36 extends through upper housing portion 78 and is supported within housing 54 by means of bearings 84, 85. Input shaft 36 is provided with worm 86 which is intermeshed with worm gear or driving member 88. Worm gear 88 is rotatably disposed about axle 64 and may rotate freely relative thereto. Also rotatably disposed about axle 64 is collar or driven member 90. Worm 86, worm gear 88 and collar 90 comprise a driving mechanism disposed within housing 54. Driven member 90, and thus the rest of this driving mechanism, is selectively operatively engaged with axle 64, as described further hereinbelow.

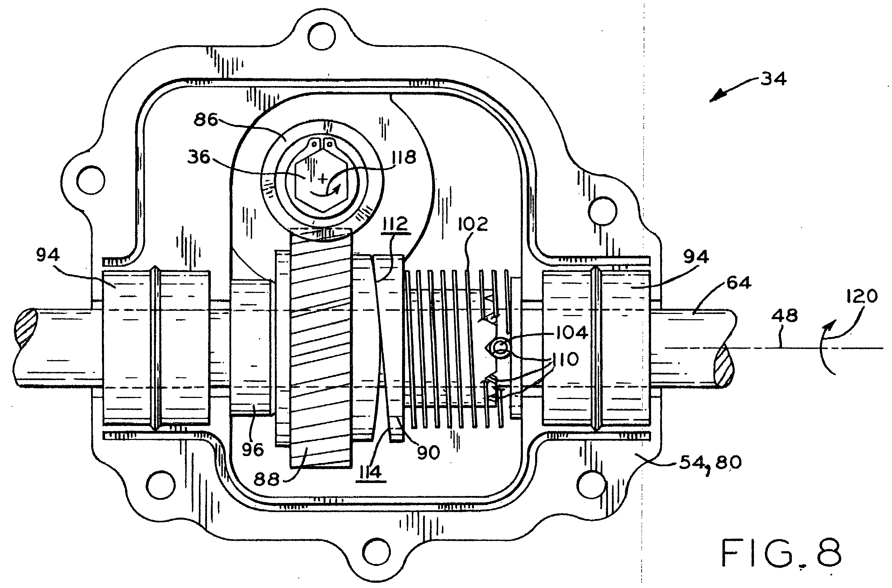

Seals 92 are disposed about axle 64 to prevent the leakage of oil, or another suitable lubricant such as grease, which is contained within housing 54, from leaking along axle 64. A pair of bearings 94 rotatably support axle 64 within housing 54. Also disposed about and arranged upon axle 64, as shown in Figure 5, are spacer 96, thrust washer 98, thrust washer 100 and compression spring 102. Compression spring 102 is disposed between thrust washer 100 and collar 90, and biases collar 90 towards worm gear 88 and out of operative engagement with axle 64. Axle 64 is provided with pin 104 which extends through and is secured within hole 106 (Figure 8) which extends diametrically through axle 64. Pin 104 may be a steel roll pin, or a steel dowel, which is interference fitted into hole 106. The ends of pin 104 extend laterally from, and form protuberances on, the cylindrical surface of axle 64. It is through engagement of pin 104 and collar 90 that axle 64 is brought into operative engagement with collar 90, worm gear 88 and worm 86.

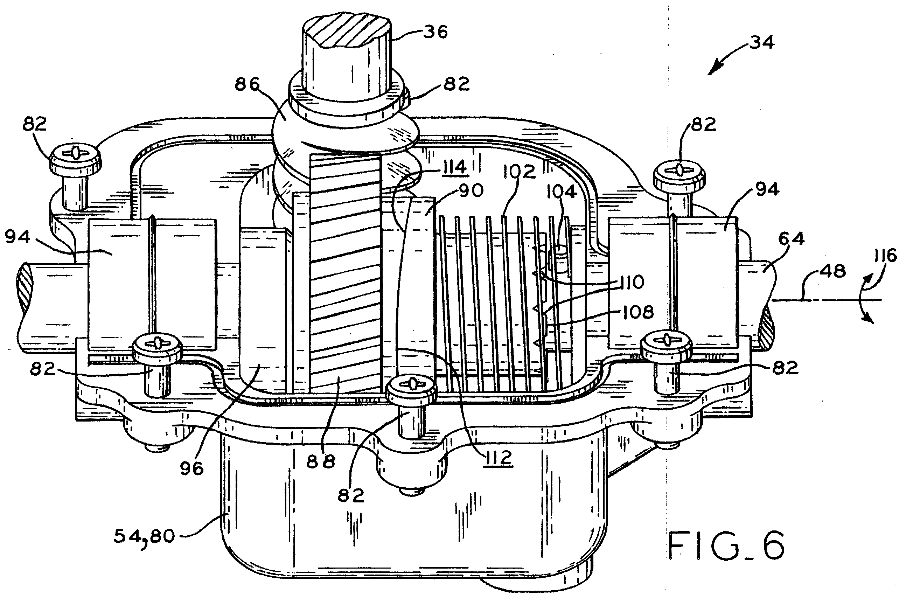

As best shown in Figure 11B, collar or driven member 90 is substantially annular and is provided with circular axial end surface 108 in which are provided a plurality circumferentially distributed recesses 110. Recesses 110 are even in number, providing diametrically opposed recess pairs, and may be substantially triangular (Figures 6-8) or semicircular (Figure 11B) in profile. The ends of pin 104 are received within a diametrically opposed pair of recesses 110 when collar 90 is engaged with axle 64.

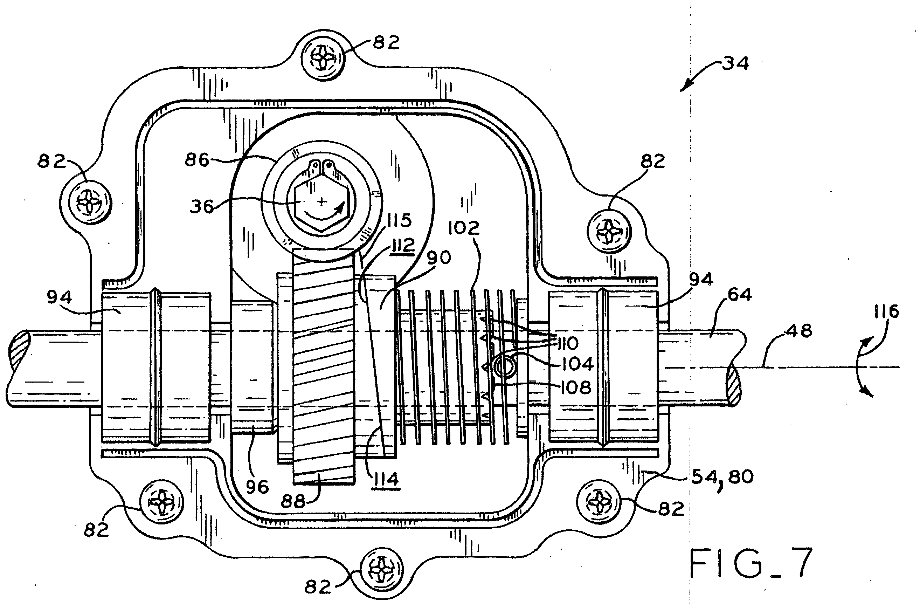

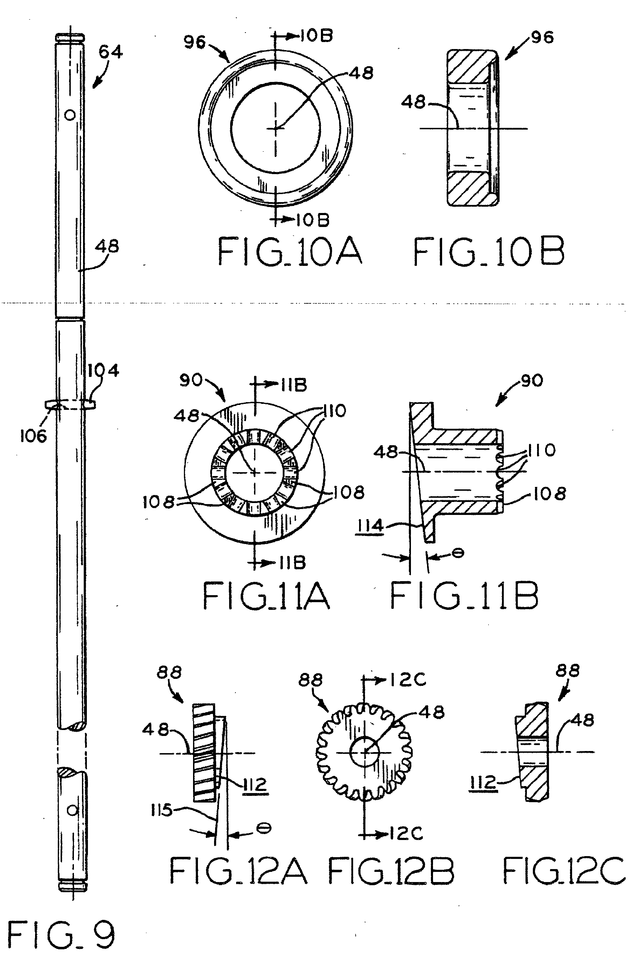

Referring to Figures 11B, 12A, and 12C, it can be seen that the interfacing ends of collar 90 and worm gear 88 are provided with flat, oblique, slidably abutting surfaces 112 and 114, respectively. Surfaces 112, 114 lie in planes which are canted at a common angle , which may be 5.9°, from a plane normal to axis of rotation 48. Relative to axle 64, worm gear or driving member 88 maintains a substantially constant position along axis of rotation 48. Collar or driven member 90, however, has a first axial position along axis of rotation 48 in which its oblique surface 114 is in full abutting contact with oblique surface 112 of worm gear 118; i.e., flat surfaces 112 and 114 both lie in common plane 115 (Figures 7 and 12A), which may wobble about axis 48 with oblique surface 112. In this first axial position of driven member 90, its axial end surface 108 is distant from pin 104, and recesses 110 are maintained out of engagement with pin 104. As noted above, compression spring 102 biases driven member 90 into this first axial position. As will now be appreciated by those of ordinary skill in the art, relative rotation between worm gear 88 and collar 90 will drive collar 90 away from worm gear 88, along axle 64, to a second axial position in which a pair of diametrically opposed recesses 110 receive the opposite ends of pin 104. In this second axial position of collar 90, oblique surfaces 112 and 114 are in partial abutting contact, but do not lie in a common plane. Here, collar 90 is operatively engaged with axle 64, and driven member 90 and axle 64 are rotatably driven in the forward direction by driving member 88.

Figures 6 and 7 show transaxle 34 in its disengaged state, in which input shaft 36 is not rotating; i.e., belt 40 is in its substantially slackened state in which output shaft 23 of engine 24 is out of operative engagement with transaxle input shaft 36. As shown, oblique surfaces 112 and 114 are in full abutting contact with one another, and lie in common plane 115 (Figure 7). Here, collar or driven member 90 is in its first axial position relative to axle 64, and the protuberances on the axle formed by the ends of pin 104 are not received within a diametrically opposed pair of recesses 110. In this first axial position of collar or driven member 90, axle 64 is free to rotate within bearings 94 in either the forward or reverse directions indicated as by arrow 116, thereby allowing the mower to be easily pushed or pulled.

When belt 40 enters its tension state, rotary motion is transferred between output shaft 23 of engine 24 and input shaft 36 of transaxle 34, and driving member 88 is caused to accelerate from a nonrotating condition. In response to the rotation of input shaft 36 in the direction of arrow 118, worm gear 88 will begin to rotate about axis of rotation 48 in the forward direction indicated by arrow 120 (Figure 8). In response to the initial rotation of worm gear 88, relative rotation between worm gear 88 and collar 90 will occur owing to the inertia of collar 90, which tends to remain at rest, and perhaps a small amount of drag exerted on collar 90 by spring 102. Worm gear 88 and collar 90 may be machined from a suitable material such as steel or aluminum or may be made of sintered powdered metal. Such materials provide collar 90 with sufficient inertia to initially resist its rotation about axis of rotation 48 in response to the initial rotation of worm gear 88. The relative rotation between worm gear 88 and collar 90 causes sliding movement between their abutting oblique surfaces 112 and 114, and surface 114 is forced out of plane 115; axial movement of collar 90 from its first axial position rightward (as viewed in Figures 6-8) to its second axial position, in which the ends of pin 104 are received in a pair of diametrically opposed recesses 110, results in operative engagement of axle 64 with input shaft 36 through the driving mechanism.

In the second axial position, the engagement of pin 104 within recesses 110 causes binding engagement between oblique surfaces 112 and 114; further relative rotation between worm gear 88 and collar 90 is prevented because the axial movement of collar 90 in the direction away from worm gear 88 is limited by the abutting relationship between collar 90 and pin 104. Thus, in its second axial position, collar 90 is rotatably fixed to worm gear 88 as it is driven thereby in the forward direction indicated by arrow 120. Thus, one of ordinary skill in the art will understood that the camming action between worm gear 88 and collar 90 allows axle 64 to have an operatively disengaged position relative thereto in which it may rotate freely, and an operatively engaged position in which it is driven in the direction of arrow 120.

When implement 20a, 20b is being self-propelled, and transaxle 34 is then disengaged from engine 24 by loosening belt 40, input shaft 36 ceases its rotation with collar 90 still in its second axial position. Collar 90 cannot not automatically return to its first axial position because the engagement of pin 104 with recesses 110 prevents reverse rotation of collar 90 in a direction opposite to arrow 120, and, as typical, worm 86 cannot be backdriven by worm gear 88 intermeshed therewith. Collar 90 may, however, be easily disengaged from axle 64 when transmission 34 is disengaged from engine 24 by the operator's pushing the implement a very short distance forward, which allows axle 64 and collar 90 to rotate in the direction of arrow 120 in advance of nonrotating worm gear 88 to an extent that spring 102 will force surfaces 112 and 114 together into common plane 115 and take collar 90 out of engagement with the ends of pin 104. Collar or driven member 90 thus returns to its first axial position and implement 20a, 20b may be easily pushed or pulled manually by the operator because axle 64 is no longer being operatively coupled to the driving mechanism within transaxle 34.

Notably, this means for disengaging collar 90 from axle 64 provides the advantage of preventing implement 20a, 20b from undesirably rolling backwards under the force of gravity when transaxle 34 is disengaged from engine 24 when the mower is on an incline. Implement 20a, 20b holds its position on the hill through the traction between drive wheels 30, 32 and the ground, and does not have to be held in place by the operator when bail 44 is released. Merely pushing the mower forward a short distance returns collar 90 to its first axial position as described above, which allows it to be easily manually maneuvered.

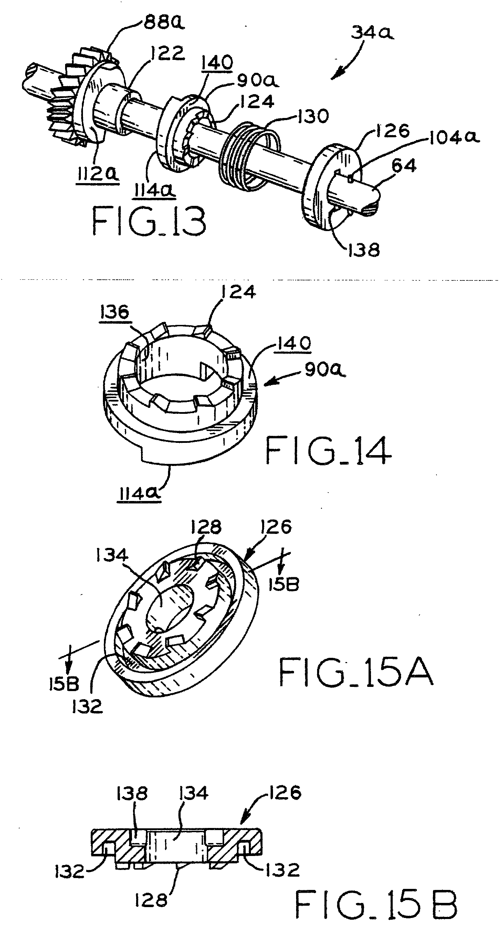

Referring now to Figure 13, a portion of second embodiment transaxle 34a is shown which replaces the circled portion of first embodiment transaxle 34 of Figure 5. Transaxle 34a is substantially identical in structure to, and operates in a substantially identical manner as, transaxle 34. According to the second embodiment of the inventive transaxle, the intergagement of pin 104 and collar 90 of transaxle 34 has been replaced with a dog clutch mechanism as described hereinbelow.

Disposed on axle 64 of transaxle 34a is worm gear 88a, substantially similar to worm gear 88, having cylindrical portion 122 formed thereon which extends from oblique surface 112a. Disposed about and riding on extending portion 122 is first driven member or collar 90a, which is similar to collar or driven member 90, having oblique surface 114a which interfaces with surface 112a. By riding on extending portion 122 as opposed to axle 64, as in transaxle 34, any binding of driven member 90a with axle 64 is prevented. Worm 86, worm gear 88a, and collar 90a comprise the driving mechanism of transaxle 34a. With the driving mechanism disengaged relative to axle 64, oblique surface 114a of driven member 90a and oblique surface 112a of worm gear or driving member 88a lie in a common plane which wobbles about the axle axis of rotation with surface 112a, as described above, such that driven member 90 is in a first axial position along axle 64 and the dog clutch is disengaged and axle 64 is free to rotate in either a forward or a reverse direction.

The dog clutch comprises a portion of driven member 90a and opposed dog clutch member 126 having aperture 134 through which axle 64 is inserted, teeth 128 which engage teeth 124 of driven member 90a when the two are in clutching engagement, and annular groove 132 in which is received spring 130 disposed between driven member 90a and dog clutch member 126. Spring 130 abuts surface 140 of driven member 90a and is compressed when driven member 90a and dog clutch member 126 move toward engagement with each other as a result of oblique surface 114a being forced out of the common plane with surface 112a as a result of relative rotation between driving and driven members 88a and 90a. Dog clutch member 126 also includes slots 138, disposed 180° from each other around aperture 134, which receive pin 104a inserted through axle 64; dog clutch member 126 is rotatably fixed to axle 64 through pin 104a and is also prevented from movement axially outward thereby. Spring 130 keeps dog clutch member 126 seated on pin 104a.

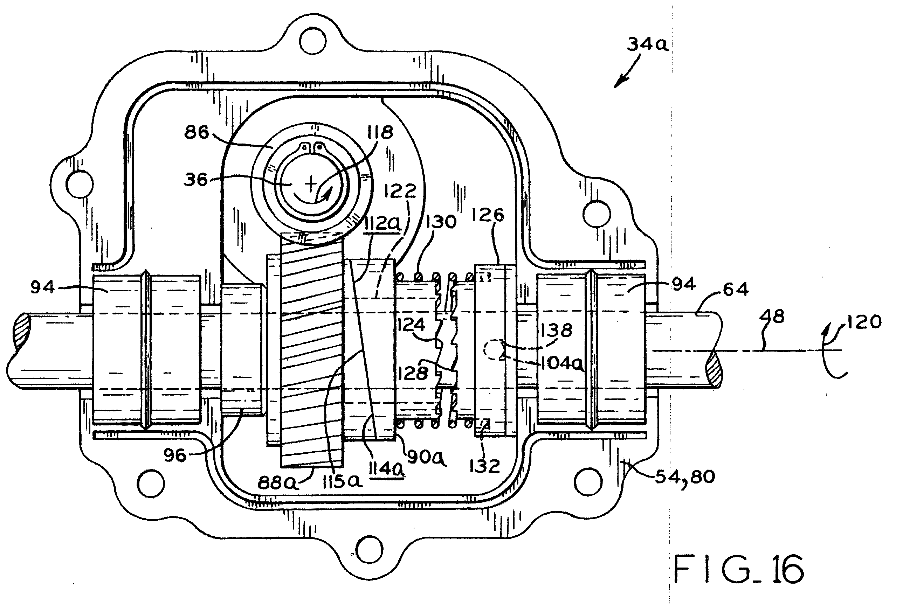

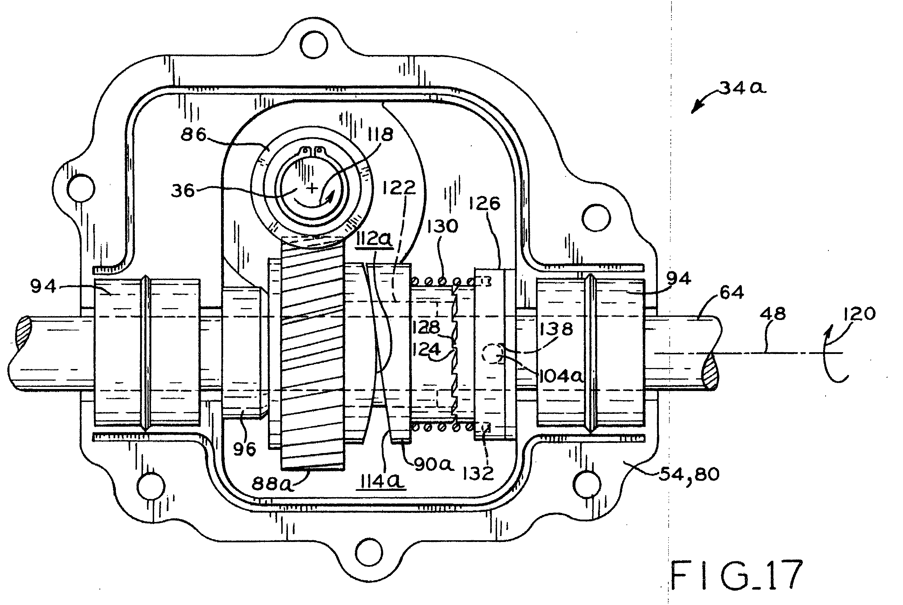

When belt 40 enters its tensioned state, as in the first embodiment, rotary motion is transferred between output shaft 23 of engine 24 and input shaft 36 of transaxle 34a, and driving member 88a is caused to accelerate from a nonrotating condition. Prior to this, driven member 90a and dog clutch member 126 may be in their respective disengaged states, as shown in Figure 16. In response to the rotation of input shaft 36, worm gear 88a will begin to rotate about axis of rotation 48 in the forward direction; in response to that rotation of worm gear 88a, relative rotation between worm gear 88a and driven member 90a will occur owing to the inertia of driven member 90a, which tends to remain at rest. Worm gear 88a and driven member 90a may be machined from a suitable material such as steel or aluminum or may be made of sintered powdered metal, similar to worm gear 88 and collar 90 of first embodiment transaxle 34. The relative rotation between worm gear 88a and driven member 90a causes sliding movement between their abutting oblique surfaces 112a and 114a, and surface 114a is forced out of plane 115a; axial movement of driven member 90a from its first axial position rightward to its second axial position, in which driven member 90a comes into clutching engagement with dog clutch member 126, as shown in Figure 17, results in operative engagement of axle 64 with input shaft 36 through the driving mechanism.

In the second axial position, shown in Figure 17, the engagement of driven member 90a and dog clutch member 126 causes binding engagement between oblique surfaces 112a and 114a; further relative rotation between worm gear 88a and driven member 90a is prevented because the axial movement of driven member 90a in the direction away from worm gear 88a is limited by the abutting relationship between driven member 90a and dog clutch member 126, specifically the engagement between teeth 124 of member 90a and teeth 128 of member 126. Thus, in its second axial position, driven member 90a is rotatably fixed to worm gear 88a as it is driven thereby in the forward direction. Thus, one of ordinary skill in the art will understood that the camming action between worm gear 88a and driven member 90a allows axle 64 to have an operatively disengaged position relative thereto in which it may rotate freely, and an operatively engaged position in which it is driven in the direction of arrow 120.

When implement 20a, 20b is being self-propelled, and transaxle 34a is then disengaged from engine 24 by loosening belt 40, input shaft 36 slows its rotation with driven member 90a still in its second axial position, and from which driven member 90a must return to its first axial position. Driven member 90a is unable to automatically return to its first axial position because the engagement of driven member 90a with dog clutch member 126 would prevent rotation of driven member 90a in a direction opposite to arrow 120, and, as typical, worm 86 cannot be backdriven by worm gear 88a intermeshed therewith. Since rotational inertia was used to move driven member 90a from its first axial position to its second axial position, as the rotation of input shaft 36 slows, leading to a slowing of axle 64, the rotational inertia likewise decreases, thus driven member 90a may be easily disengaged from axle 64 when transmission 34a is disengaged from engine 24 by spring 130 urging driven member 90a and dog clutch member 126 apart since the force of spring 130 has become greater than the rotational inertia. As they move apart, driven member 90a moves such that oblique surfaces 112a and 114a again come together and abut in plane 115a, and driven member 90a is take out of engagement with dog clutch member 126. Driven member 90a thus returns to its first axial position and implement 20a, 20b may be easily pushed or pulled manually by the operator because axle 64 is no longer being operatively coupled to the driving mechanism within transaxle 34a.

While this invention has been described as having exemplary designs, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A self-propelled, walk-behind implement (20a, 20b) including a body (22), an engine (24) attached to said body, said engine having an output shaft (23), ground-engaging drive wheels (30, 32), and a transaxle (34, 34a), said transaxle including a housing (54), a rotatable input shaft (36) extending into said housing and selectively operatively engaged with said engine output shaft, an axle (64) having an axis of rotation (48), said axle extending through said housing, said drive wheels coupled to said axle, a rotatable driving member (88, 88a) disposed within said housing and engaged with said input shaft, said driving member being rotatably driven by said input shaft, and a driven member (90, 90a) disposed within said housing and being rotatably driven by the rotating driving member, **characterized by** said driven member having a first axial position along said axle axis of rotation in which said driven member is out of operative engagement with said axle, said axle being freely rotatable relative to said housing when said driven member is in its said first axial position, and a second axial position along said axle axis of rotation when said input shaft is operatively engaged with said engine output shaft and in which said driven member is in operative engagement with said driving member and said axle.

2. The implement of claim 1, **characterized in that** said driven member is engaged with said driving member in its said first axial position.

3. The implement of claim 1, **characterized in that** said driven member is in its said first axial position only when said input shaft is out of operative engagement with said engine.

4. The implement of claim 1, wherein said transaxle input shaft and engine output shaft are each provided with pulleys (38, 41), and a belt (40) is reeved over said pulleys, and **characterized in that** said input and output shafts are in operative engagement through said belt when said belt is in a substantially tensioned state, said input and output shafts being out of operative engagement when said belt is in a substantially slackened state.

5. The implement of claim 4, **characterized in that** said transaxle is pivotable about said axle axis of rotation between engaged and disengaged positions, said belt being in its said substantially tensioned state in said transaxle engaged position, said belt being in its said substantially slackened state in said transaxle disengaged position.

6. The implement of claim 4, **characterized by** a tensioner (62) attached to said body, said tensioner having an engaged position in which it engages said belt and said belt is in its said substantially tensioned state, and a disengaged position in which said belt is in its said substantially slackened state.

7. The implement of claim 1, **characterized in that** said driving and driven members are rotatable relative to each other and each have slidably engaged oblique surfaces (112, 112a, 114, 114a), said driven member being in its said first axial position at a first angular position relative to said driving member, said driven member being in its said second axial position at a second angular position relative to said driving member.

8. The implement of claim 1, **characterized in that** said driving and driven members are disposed about said axle.

9. The implement of claim 8, **characterized in that** said axle is provided with a protuberance, said driven member engaged with said protuberance in its said second axial position, whereby said driven member and said axle are placed in operative engagement.

10. The implement of claim 9, **characterized in that** said driven member is substantially annular and has an axial end surface (108) provided with a recess (110), said axle protuberance being received into said recess in said driven member second axial position.

11. The implement of claim 10, **characterized in that** said axial end surface is provided with a plurality of circumferentially distributed recesses (110), said axle protuberance being received into one of said driven member recesses in said driven member second axial position.

12. The implement of claim 10, **characterized in that** said axle is cylindrical and provided with a pair of diametrically opposite protuberances, said protuberances being received into a diametrically opposite pair of said driven member recesses (110) in said driven member second axial position.

13. The implement of claim 7, **characterized in that** said driving member includes a cylindrical portion (122), said driven member being rotatable on said cylindrical portion.

14. The implement of claim 13, **characterized in that** said driven member includes a plurality of teeth (124) on a circumferential edge opposite its said oblique surface.

15. The implement of claim 14, **characterized by** a dog clutch member (126) having a plurality of teeth (128) thereon, said dog clutch member teeth engageable with said driven member teeth.

16. The implement of claim 15 **characterized by** a spring (130) disposed on said axle between said driven member and said dog clutch member.

17. The implement of claim 16, **characterized in that** when said driven member is in its said second axial position, and rotational inertia of said dog clutch member overcomes the force of said spring, said dog clutch member teeth and said driven member teeth are in engagement and said driving member is in operative engagement with said axle.

18. A transaxle (34, 34a) for a walk-behind implement including a housing (54), a rotatable input shaft (36) extending into said housing, an axle (64) having an axis of rotation (48), said axle extending through said housing, a rotatable driving member (88, 88a) disposed within said housing and engaged with said input shaft, said driving member being rotatably driven by said input shaft, and a driven member (90, 90a) disposed within said housing and being rotatably driven by the rotating driving member, **characterized by** said driven member having a first axial position along said axle axis of rotation in which said driven member is out of operative engagement with said axle, said axle being freely rotatable relative to said housing when said driven member is in its said first axial position, and a second axial position along said axle axis of rotation when said input shaft is rotated and in which said driven member is in operative engagement with said driving member and said axle.

19. The transaxle of claim 18, **characterized in that** said driven member is engaged with said driving member in its said first axial position.

20. The transaxle of claim 18, **characterized in that** said driven member is in its said first axial position only when said input shaft is not being rotated.

21. The transaxle of claim 18, **characterized in that** said driving and driven members are rotatable relative to each other and each have slidably engaged oblique surfaces (112, 112a, 114, 114a), said driven member being in its said first axial position at a first angular position relative to said driving member, said driven member being in its said second axial position at a second angular position relative to said driving member.

22. The transaxle of claim 21, **characterized in that** said driving and driven member oblique surfaces both substantially lie in a common plane (115, 115a) in said driven member first axial position.

23. The transaxle of claim 21, **characterized in that** said driving and driven member oblique surfaces substantially lie in different planes in said driven member second axial position.

24. The transaxle of claim 21, **characterized in that** said driving member includes a cylindrical portion (122), said driven member being rotatable on said cylindrical portion, and **in that** said driven member includes a plurality of teeth (124) on a circumferential edge opposite its said oblique surface.

25. The transaxle of claim 24, **characterized by** a dog clutch member (126) having a plurality of teeth (128) thereon, said dog clutch member teeth engageable with said driven member teeth, and a spring (130) disposed on said axle between said driven member and said dog clutch member.

26. The transaxle of claim 25, **characterized in that** when said driven member is in its said second axial position, and rotational inertia of said dog clutch member overcomes the force of said spring, said dog clutch member teeth and said driven member teeth are in engagement and said driving member is in operative engagement with said axle.

27. The transaxle of claim 18, **characterized in that** said driving and driven members are disposed about said axle.

28. The transaxle of claim 27, **characterized in that** said axle is provided with a protuberance, said driven member engaged with said protuberance in its said second axial position, whereby said driven member and said axle are placed in operative engagement.

29. The transaxle of claim 28, **characterized in that** said driven member is substantially annular and has an axial end surface (108) provided with a recess (110), said axle protuberance being received into said recess in said driven member second axial position.

30. The transaxle of claim 29, **characterized in that** said driven member axial end surface is provided with a plurality of circumferentially distributed recesses (110), said axle protuberance being received into one of said recesses in said driven member second axial position.

31. The transaxle of claim 29, **characterized in that** said axle is cylindrical and provided with a pair of diametrically opposite protuberances, said protuberances being received into a diametrically opposite pair of said driven member recesses (110) in said driven member second axial position.
